# EUROPEAN PATENT SPECIFICATION

(11) **EP 4 306 354 B1**
(45) Date of publication and mention of the grant of the patent: **10.09.2025**
(21) Application number: 23185519.8
(22) Date of filing: 14.07.2023
(51) Int. Cl.: B60L 53/22, B60L 53/24, H02M 7/5387

(54) **POWERTRAIN, CHARGING CONTROL METHOD, AND ELECTRIC VEHICLE**
ANTRIEBSSTRANG, LADESTEUERUNGSVERFAHREN UND ELEKTROFAHRZEUG
GROUPE MOTOPROPULSEUR, PROCÉDÉ DE COMMANDE DE CHARGE ET VÉHICULE ÉLECTRIQUE

(30) Priority: 14.07.2022 CN 202210827900
(43) Date of publication of application: 17.01.2024
(73) Proprietor: Huawei Digital Power Technologies Co., Ltd., Shenzhen, Guangdong 518043 (CN)
(72) Inventor: LI, Ying, Shenzhen, 518043 (CN); LUO, Xian, Shenzhen, 518043 (CN)
(74) Representative: Gill Jennings & Every LLP

(56) References cited:
- CN-A- 111 347 926
- CN-A- 114 475 303
- DE-A1- 102015 202 693
- US-A1- 2019 315 234
- US-B2- 10 286 800

## Description

### TECHNICAL FIELD

This application relates to the field of new energy vehicle technologies, and in particular, to a powertrain, a charging control method, and an electric vehicle.

### BACKGROUND

Output voltages of some charging piles on an existing market range from 220 V to 500 V. To resolve a problem of a slow charging speed of an electric vehicle, a voltage of a power battery equipped on the current electric vehicle is high, for example, 600 V to 800 V. Therefore, when the voltage of the power battery on the electric vehicle is 600 V, a charging pile that can only output a voltage ranging from 220 V to 500 V cannot charge the electric vehicle. Therefore, to adapt to the some charging piles on the existing market, a bridge arm and a motor winding used to drive a motor in the electric vehicle can be reused, to increase the voltages output by the charging piles, and further provide increased voltages to the power battery. In this case, how to specifically control turn-no or turn-off of the bridge arm is a key research issue at present.
CN114475303 describes a control method and device for a power supply circuit and an electric vehicle.
CN111347926 describes power battery charging and discharging devices, a vehicle and a heating device. The power battery charging device comprises a first switch module, a three-phase inverter, a three-phase alternating current motor, an energy storage module, a second switch module and a control module.
US2019/315234 describes a charging system for a vehicle.
DE102015202693 describes a method for determining phase currents (IU, IV, IW) in an electrical multiphase system.

### SUMMARY

The invention is defined by the appended claims. This application provides a powertrain, a charging control method, and an electric vehicle, which can ensure that heat generated by magnetic steel in a motor falls within a safe range, and reduce a ripple of an output current of the powertrain.

According to a first aspect, an embodiment of this application provides a powertrain. The powertrain is disposed between a direct current power supply and a power battery, the powertrain includes a motor control unit (Motor Control Unit, MCU) and a motor, the MCU includes three bridge arms and a controller, and the motor includes three motor windings corresponding to the three bridge arms. In specific implementation, a first endof the direct current power supply is coupled to one end of each of the three bridge arms and a first end of the power battery, and a second end of the power battery is coupled to the other end of each bridge arm. A midpoint of each bridge arm is coupled to one end of a motor winding corresponding to each bridge arm, and the other end of each of the three motor windings is coupled to a second end of the direct current power supply. The three bridge arms include a first bridge arm and a second bridge arm. The first bridge arm may be turned on or off based on a first pulse width modulation (Pulse Width Modulation, PWM) signal sent by the controller, and the second bridge arm may be turned on or off based on a second PWM signal sent by the controller. The first PWM signal and the second PWM signal are interleaved, that is, a rising edge of the second PWM signal lags behind a first preset time period relative to a rising edge of the first PWM signal, or a falling edge of the second PWM signal lags behind a second preset time period relative to a falling edge of the first PWM signal. In the embodiment of this application, the first PWM signal and the second PWM signal are controlled to be interleaved, to balance the amount of heat generated by magnetic steel in the motor and a size of a ripple of an output current of the powertrain, thereby not only ensuring that the heat generated by the magnetic steel in the motor falls within a safe range, but also reducing the ripple of the output current of the powertrain.

As part of the first aspect, the three bridge arms further include a third bridge arm. The third bridge arm may be turned on or off based on a third PWM signal. A rising edge of the third PWM signal and the rising edge of the first PWM signal appear simultaneously, and a falling edge of the third PWM signal and the falling edge of the first PWM signal appear simultaneously.

As part of the first aspect, a time period of the first PWM signal is T, and the first preset time period is T/2, or the second preset time period is T/2.

With reference to the first aspect, in a first possible implementation, the powertrain further includes a first switching switch and a second switching switch. One end of the first switching switch is coupled to a midpoint of any of the three bridge arms.

That the other end of each of the three motor windings is coupled to a second end of the direct current power supply is specifically: the other end of each of the three motor windings is coupled to one end of the second switching switch, and the other end of the second switching switch and the other end of first switching switch are coupled to the second end of the direct current power supply.

According to a second aspect, an embodiment of this application provides a charging control method. The charging control method is applied to a powertrain, and the powertrain includes a motor control unit (Motor Control Unit, MCU) and a motor. The MCU includes three bridge arms and a controller, and the motor includes three motor windings corresponding to the three bridge arms. In specific implementation, a first end of the direct current power supply is coupled to one end of each of the three bridge arms and a first end of a power battery, and a second end of the power battery is coupled to the other end of each bridge arm. A midpoint of each bridge arm is coupled to one end of a motor winding corresponding to each bridge arm, and the other end of each of the three motor windings is coupled to a second end of the direct current power supply. The three bridge arms include a first bridge arm and a second bridge arm.

The charging control method is specifically: sending, by the controller, a first pulse width modulation (Pulse Width Modulation, PWM) signal to the first bridge arm, and sending a second PWM signal to the second bridge arm. The first PWM signal and the second PWM signal are interleaved, that is, a rising edge of the second PWM signal lags behind a first preset time period relative to a rising edge of the first PWM signal, or a falling edge of the second PWM signal lags behind a second preset time period relative to a falling edge of the first PWM signal.

As part of the second aspect, the three bridge arms further include a third bridge arm. The charging control method further includes: sending, by the controller, a third PWM signal to the third bridge arm. A rising edge of the third PWM signal and the rising edge of the first PWM signal appear simultaneously, and a falling edge of the third PWM signal and the falling edge of the first PWM signal appear simultaneously.

As part of the second aspect, a time period of the first PWM signal is T, and the first preset time period is T/2, or the second preset time period is T/2.

According to a third aspect, an embodiment of this application provides an electric vehicle. The electric vehicle includes a power battery and the powertrain with reference to the first aspect or any of the possible implementations of the first aspect.

It should be understood that mutual reference may be made between implementations and beneficial effects of the foregoing aspects in this application.

### BRIEF DESCRIPTION OF DRAWINGS

FIG. 1 is a schematic diagram of a structure of a powertrain according to an embodiment of this application;
FIG. 2 is a schematic diagram of a charging scenario of an electric vehicle according to an embodiment of this application;
FIG. 3 is a schematic diagram of a structure of a powertrain according to an embodiment of this application;
FIG. 4 is a schematic diagram of a waveform according to an example useful for understanding the invention;
FIG. 5 is a schematic diagram of another waveform according to an example useful for understanding the invention;
FIG. 6 is a schematic diagram of another waveform according to an example useful for understanding the invention;
FIG. 7A and the FIG. 7B are schematic diagrams of a current ripple according to an example useful for understanding the invention;
FIG. 8 is a schematic diagram of another waveform according to an embodiment of this application;
FIG. 9 is a schematic diagram of another structure of a powertrain according to an embodiment of this application;
FIG. 10 is a schematic diagram of another structure of a powertrain according to an example useful for understanding the invention;
FIG. 11A to FIG. 11F are schematic diagrams of a circuit status of a powertrain according to an example useful for understanding the invention;
FIG. 12A and FIG. 12B are schematic diagrams of another circuit status of a powertrain according to an example useful for understanding the invention;
FIG. 13A and FIG. 13B are schematic diagrams of another circuit status of a powertrain according to an example useful for understanding the invention; and
FIG. 14A and FIG. 14B are schematic diagrams of another circuit status of a powertrain according to an example useful for understanding the invention.

### DESCRIPTION OF EMBODIMENTS

The following clearly describes the technical solutions in embodiments of this application with reference to the accompanying drawings in embodiments of this application.

The technical solutions of this application are further described below in detail with reference to the accompanying drawings.

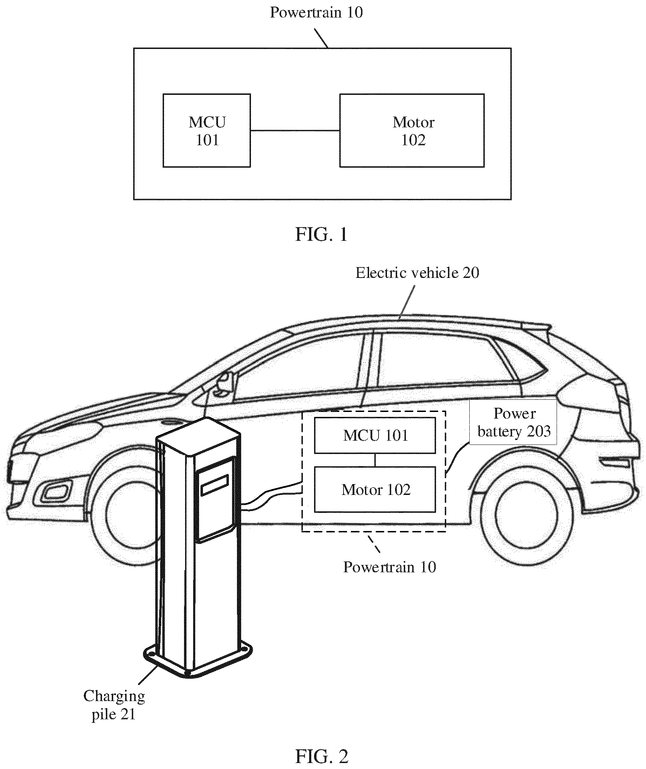

FIG. 1 is a schematic diagram of a structure of a powertrain according to an embodiment of this application. As shown in FIG. 1, the powertrain 10 includes a motor control unit (Motor Control Unit, MCU) 101 and a motor 102.

The MCU 101 includes three bridge arms and a controller. The controller may send pulse width modulation (Pulse Width Modulation, PWM) signals to the three bridge arms. The three bridge arms may be turned on or off respectively based on the received PWM signals.

For example, the controller may be, for example, a central processing unit (central processing unit, CPU), another general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

In some possible implementations, the three bridge arms and the controller are welded in a body of a same printed circuit board (Printed Circuit Board, PCB) or bodies of different PCBs. The PCB may be specifically disposed inside a hardware box. The hardware box is disposed on the top of the motor.

The powertrain 10 may be integrated as a whole and disposed in an electric vehicle. In this case, a schematic diagram of a charging scenario of an electric vehicle is shown in FIG. 2. As shown in FIG. 2, an electric vehicle 20 includes a power battery 203 and the powertrain 10 shown in FIG. 1.

The power battery 203 establishes a connection to a direct current power supply by using the powertrain 10. In FIG. 2, an example in which the direct current power supply is a charging pile 21 is used. In some other possible implementations, the direct current power supply may be specifically another electric vehicle (not shown in the figure).

The following describes a specific structure of the powertrain provided in embodiments of this application with reference to the accompanying drawings.

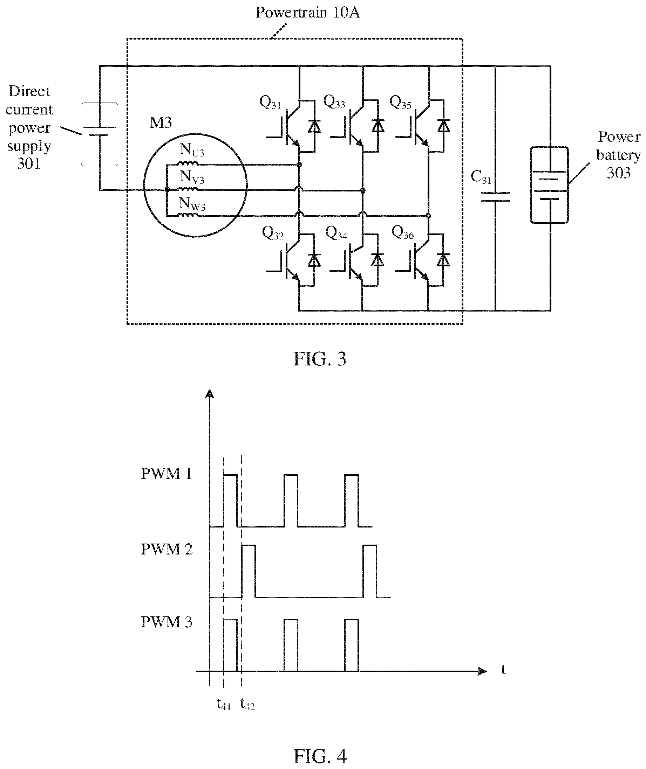

In some possible implementations, FIG. 3 is a schematic diagram of a structure of a powertrain according to an embodiment of this application. As shown in FIG. 3, a powertrain 10A is disposed between a direct current power supply 301 and a power battery 303. The powertrain 10A includes an MCU and a motor M3.

The MCU includes three bridge arms and a controller (not shown in the figure). The three bridge arms include a first bridge arm, a second bridge arm, and a third bridge arm. It should be noted that each bridge arm may include two switch units connected in series. A switch unit can include at least one switch connected in series or in parallel. During specific practice, the switch unit can select, based on a voltage and a current in a power supply module, a plurality of switches connected in series or in parallel. The switch may be an insulated gate bipolar transistor (Insulated Gate Bipolar Transistor, IGBT) and an anti-parallel diode of the IGBT, or a metal-oxide-semiconductor field-effect transistor (Metal-Oxide-Semiconductor Field-Effect Transistor, MOSFET). In general, types and quantities of switches in the switch unit are not limited in embodiments of this application.

For example, an example in which a switch included in a bridge arm is specifically the IGBT and the anti-parallel diode of the IGBT is used. As shown in FIG. 3, the first bridge arm includes a switch tube *Q*₃₁ and a switch tube *Q*₃₂ connected in series with the switch tube *Q*₃₁. The second bridge arm includes a switch tube *Q*₃₃ and a switch tube *Q*₃₄ connected in series with the switch tube *Q*₃₃. The third bridge arm includes a switch tube *Q*₃₅ and a switch tube *Q*₃₆ connected in series with the switch tube *Q*₃₅.

It should be noted that the first bridge arm, the second bridge arm, and the third bridge arm may be interchangeable. For example, the first bridge arm includes the switch tube *Q*₃₃ and the switch tube *Q*₃₄ connected in series with the switch tube *Q*₃₃. The second bridge arm includes the switch tube *Q*₃₅ and the switch tube *Q*₃₆ connected in series with the switch tube *Q*₃₅. The third bridge arm includes the switch tube *Q*₃₁ and the switch tube *Q*₃₂ connected in series with the switch tube *Q*₃₁.

In specific implementation, a first end of the direct current power supply 301 is coupled to one end of each bridge arm and a first end of the power battery 303. In this case, as shown in FIG. 3, the first end of the direct current power supply 301 is a positive end, a second end of the direct current power supply 301 is a negative end, the first end of the power battery 303 is a positive end, and a second end of the power battery 303 is a negative end.

In this case, the positive end of the direct current power supply 301 is coupled to a collector of the switch tube *Q*₃₁, a collector of the switch tube *Q*₃₃, a collector of the switch tube *Q*₃₅, and the positive end of the power battery 303. The negative end of the power battery 303 is coupled to an emitter of the switch tube *Q*₃₂, an emitter of the switch tube *Q*₃₄, and an emitter of the switch tube *Q*₃₆.

It should be noted that the "coupling" described in this application is referred to directly or indirectly connection. For example, that A is coupled to B may be that A is directly connected to B, or may be that A and B are indirectly connected by using one or more other electronic components. For example, A may be directly connected to C, and C is directly connected to B, so that A and B are connected by using C. For example, the direct current power supply 301 may be connected to the collector of the switch tube *Q*₃₁, the collector of the switch tube *Q*₃₃, the collector of the switch tube *Q*₃₅, and the positive end of the power battery 303 by using switches.

A midpoint of each bridge arm is coupled to one end of a motor winding corresponding to each bridge arm. The midpoint of each bridge arm is a series coupling point between two switch units connected in series. In this case, an emitter of the switch tube *Q*₃₁ and a collector of the switch tube *Q*₃₂ are coupled to one end of a motor winding *N*_{*U*3}, an emitter of the switch tube *Q*₃₃ and a collector of the switch tube *Q*₃₄ are coupled to one end of a motor winding *N*_{*V*3}, and an emitter of the switch tube *Q*₃₅ and a collector of the switch tube *Q*₃₆ are coupled to one end of a motor winding *N*_{*W*3}.

The other end of the motor winding *N*_{*U*3}, the other end of the motor winding *N*_{*V*3}, and the other end of the motor winding *N*_{*W*3} are coupled to the negative end of the direct current power supply 301.

Optionally, in some possible implementations, the first end of the direct current power supply may be the negative end, the second end of the direct current power supply may be the positive end, the first end of the power battery may be the negative end, and the second end of the power battery may be the positive end (not shown in the figure). In this case, the positive end of the direct current power supply is coupled to the other end of each motor winding, and the negative end of the direct current power supply is coupled to the other end of each bridge arm.

How to specifically control the powertrain provided in this embodiment of this application is used as an example for description below with reference to the accompanying drawings.

In some possible implementations, FIG. 4 is a schematic diagram of a waveform according to an example useful for understanding the invention. As shown in FIG. 4, the controller may send a PWM1 signal to the switch tube *Q*₃₁ and send a PWM2 signal to the switch tube *Q*₃₃. In this case, a rising edge of the PWM1 signal, for example, is at a *t*₄₁ moment, a rising edge of the PWM2 signal, for example, is at a *t*₄₂ moment. Therefore, interleaving of the PWM1 signal and the PWM2 signal is specifically: the *t*₄₂ moment lags behind the *t*₄₁ moment for a first preset time period.

The first preset time period is preset. A length of the first preset time period is related to a size of a ripple of an output current of the powertrain and the amount of heat generated by magnetic steel in the motor. The setting of the first preset time period may be adjusted based on specific practical applications, that is, the length of the first preset time period is not limited in this embodiment of this application.

Certainly, interleaving of the PWM1 signal and the PWM2 signal may alternatively be that a falling edge of the PWM1 signal and a falling edge of the PWM2 signal are staggered. For example, the falling edge of the PWM2 signal lags behind a second preset time period relative to the falling edge of the PWM1 signal. Similarly, the second preset time period is preset. A length of the second preset time period is related to a size of a ripple of an output current of the powertrain and the amount of heat generated by magnetic steel in the motor. The setting of the second preset time period may also be adjusted based on specific practical applications, that is, the length of the second preset time period is not limited in the example of this application.

It should be noted that in specific practical applications, the rising edges or the falling edges of the PWM1 signal and the PWM2 signal may be set, that is, the first preset time period is preset or the second preset time period is preset, to implement interleaving of the PWM1 signal and the PWM2 signal. Alternatively, the rising edges and the falling edges of the PWM1 signal and the PWM2 signal may be set simultaneously, that is, the first preset time period and the second preset time period are preset, to implement interleaving of the PWM1 signal and the PWM2 signal.

For example, an example in which the controller sends a PWM3 signal to the switch tube *Q*₃₅ is used in FIG. 4. A rising edge of the PWM3 signal, for example, is at the *t*₄₁ moment, that is, the rising edge of the PWM3 signal and the rising edge of the PWM1 appear simultaneously.

It may be understood that the signals sent by the controller to two switch units in a same switch bridge arm are complementary. That is, a signal sent by the controller to the switch tube *Q*₃₂ and the PWM1 signal are complementary, a signal sent to the switch tube *Q*₃₄ and the PWM2 signal are complementary, and a signal sent to the switch tube *Q*₃₆ and the PWM3 signal are complementary. In this case, in this example of this application, the PWM1 signal controlling the switch tube *Q*₃₁ may be referred as a first PWM signal, and the PWM2 signal controlling the switch tube *Q*₃₃ may be referred to as a second PWM signal.

When the switch tube *Q*₃₁ and the switch tube *Q*₃₃ are turned on simultaneously, the motor winding *N*_{*U*3} and the motor winding *N*_{*V*3} are connected in parallel, so that the inductance in the powertrain is reduced, thereby increasing a ripple of an output current of the powertrain. In this embodiment of this application, the controller controls the first PWM signal of the first bridge arm (that is, the switch tube *Q*₃₁) and the second PWM signal of the second bridge arm (that is, the switch tube *Q*₃₃) to be interleaved with each other, so that the switch tube *Q*₃₃ lags behind the switch tube *Q*₃₁ to be turned on, and then the motor winding *N*_{*U*3} and the motor winding *N*_{*V*3} in the powertrain are connected in parallel for less time, or even the motor winding *N*_{*U*3} and the motor winding *N*_{*V*3} are not connected in parallel. In this case, the inductance in the powertrain is larger than the inductance generated when the switch tube *Q*₃₁ and the switch tube *Q*₃₃ are turned on simultaneously, and the ripple of the output current of the powertrain is small.

In general, in this example of this application, a balance between the amount of heat generated by magnetic steel in the motor and a size of a ripple of an output current of the powertrain can not only ensure that the heat of the magnetic steel in the motor falls within a safe range, but also can reduce the ripple of the output current of the powertrain.

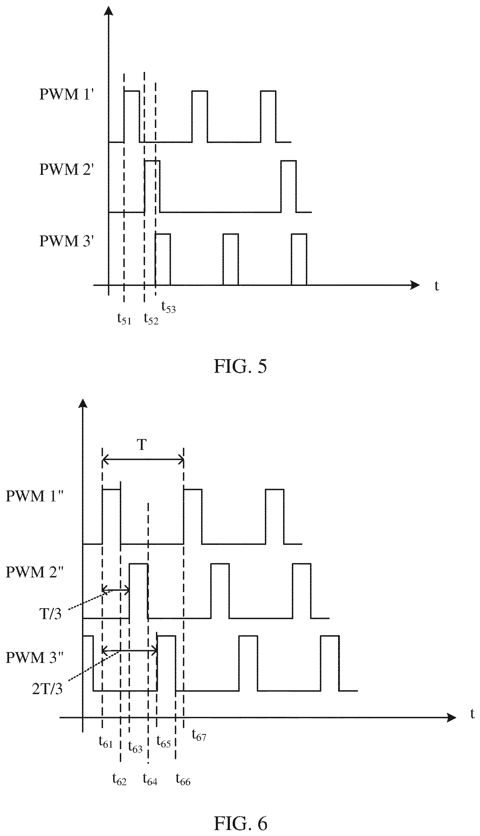

Optionally, in some possible implementations, FIG. 5 is a schematic diagram of another waveform according to an example useful for understanding the invention. As shown in FIG. 5, the controller may send a PWM1' signal to the switch tube *Q*₃₁, send a PWM2' signal to the switch tube *Q*₃₃, and send a PWM3' signal to the switch tube *Q*₃₅. In this case, a rising edge of the PWM1' signal, for example, is at a *t*₅₁ moment, a rising edge of PWM2' signal for example, is at a *t*₅₂ moment, and a rising edge of PWM3', for example, is at a *t*₅₃ moment.

That the PWM1' signal, the PWM2' signal, the PWM3' signal are interleaved with each other is specifically: the *t*₅₂ moment lags behind the *t*₅₁ moment for a first preset time period, and the *t*₅₃ moment lags behind the *t*₅₂ moment for a third preset time period. The third preset time period is also preset. A length of the third preset time period is also related to a size of a ripple of an output current of the powertrain and the amount of heat generated by magnetic steel in the motor. The setting of the third preset time period may be adjusted based on specific practical applications, that is, the length of the third preset time period is not limited in this example of this application.

Certainly, that the PWM1' signal, the PWM2 signal, and the PWM3' signal are interleaved with each other may alternatively be specifically: a falling edge of the PWM2' signal lags behind a second preset time period relative to a falling edge of the PWM1' signal, and a falling edge of the PWM3' signal lags behind a fourth preset time period relative to a falling edge of the PWM2' signal. Similarly, the fourth preset time period is preset. The fourth preset time period is related to a size of a ripple of an output current of the powertrain and the amount of heat generated by magnetic steel in the motor. The setting of the fourth preset time period may also be adjusted based on specific practical applications, that is, the length of the fourth preset time period is not limited in this embodiment of this application.

It should be noted that in specific practical applications, the rising edges or the falling edges of the PWM1' signal, the PWM2' signal, and the PWM3' signal may be set, that is, the first preset time period and the third preset time period are preset, to implement interleaving of the PWM1' signal, the PWM2' signal, and the PWM3' signal. Alternatively, the second preset time period and the fourth preset time period are preset, to implement interleaving of the PWM1' signal, the PWM2' signal, and the PWM3' signal. Alternatively, the rising edges and the falling edges of the PWM1' signal, the PWM2' signal, and the PWM3' signal may be set simultaneously, that is, the first preset time period, the second preset time period, the third preset time period, and the fourth preset time period are preset, to implement interleaving of the PWM1' signal, the PWM2' signal, and the PWM3' signal.

The schematic diagram of the waveform shown in this example of this application specifically realizes three-phase interleaving, that is, switch tubes in the three bridge arms are not turned on simultaneously. For example, the switch tube *Q*₃₃ lags behind the switch tube *Q*₃₁ to be turned on, and the switch tube *Q*₃₅ lags behind the switch tube *Q*₃₃ to be turned on. Compared to controlling the three bridge arms by using the schematic diagram of the waveform shown in FIG. 4, the inductance of the powertrain obtained through controlling in this embodiment of this application is larger, so that the ripple of the output current of the powertrain is smaller, but in this case, the amount of the heat generated by the magnetic steel of the motor is larger. In general, according to this example of this application, it can also be ensured that heat generated by magnetic steel in the motor falls within a safe range, and a ripple of an output current of the powertrain is reduced.

Optionally, in some possible implementations, FIG. 6 is a schematic diagram of another waveform according to an example useful for understanding the invention. As shown in FIG. 6, the controller may send a PWM1" signal to the switch tube *Q*₃₁, send a PWM2" signal to the switch tube *Q*₃₃, and send a PWM3" signal to the switch tube *Q*₃₅. In this case, a rising edge of the PWM1" signal, for example, is at a *t*₆₁ moment, a corresponding falling edge is at a *t*₆₂ moment. A rising edge of the PWM2" signal, for example, is at a *t*₆₃ moment, and a corresponding falling edge is at a *t*₆₄ moment. A rising edge of the PWM3" signal, for example, is at a *t*₆₅ moment, and a corresponding falling edge is at a *t*₆₆ moment. A next rising edge of the PWM1" signal is at a *t*₆₇ moment. Therefore, a time period of the PWM1" signal is a time difference (for example, T) between the *t*₆₇ moment and the *t*₆₁ moment.

That the PWM1" signal, the PWM2" signal, and the PWM3" signal are interleaved with each other is specifically: the *t*₆₃ moment lags behind the *t*₆₁ moment for a first preset time period, and the *t*₆₅ moment lags behind the *t*₆₃ moment for a third preset time period. Compared to the schematic diagram of the waveform shown in FIG. 5, in this example of this application, the first preset time period and the third preset time period are equal, and are T/3. In this case, the three bridge arms are three-phase interleaved by 120°.

Certainly, that the PWM1" signal, the PWM2" signal, and the PWM3" signal are interleaved with each other may alternatively be specifically: the falling edge of the PWM2" signal lags behind a second preset time period relative to the falling edge of the PWM1" signal, and the falling edge of the PWM3" signal lags behind a fourth preset time period relative to the falling edge of the PWM2" signal. In this case, the second preset time period and the fourth preset time period are equal, and are T/3.

The schematic diagram of the waveform shown in this embodiment of this application specifically realizes three-phase interleaving by 120°, that is, switch tubes in the three bridge arms are not turned on simultaneously. For example, the turn-on of the switch tube *Q*₃₃ lags behind the turn-on of the switch tube *Q*₃₁ for T/3, and the turn-on of the switch tube *Q*₃₅ lags behind the turn-on of the switch tube *Q*₃₃ for T/3. Compared to controlling the three bridge arms by using the schematic diagram of the waveform shown in FIG. 5, the control manner of three-phase interleaving by 120° in this example of this application is more in accordance with a controlling habit of the motor, and the technical effects described in FIG. 5 may also be implemented in this example of this application.

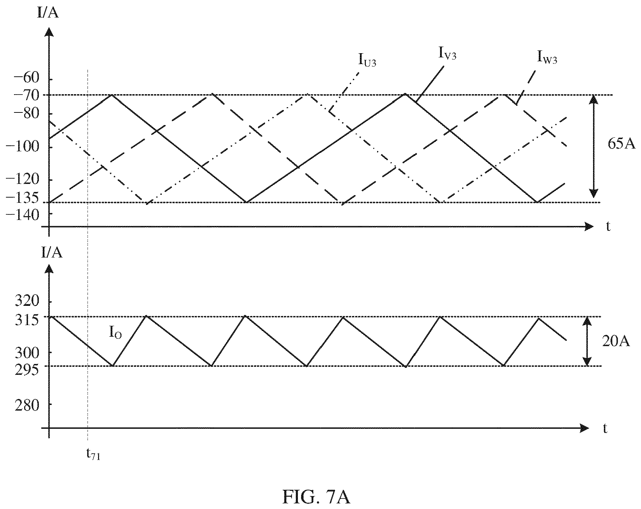

In this case, a schematic diagram of a ripple of an output current of the powertrain may refer to FIG. 7A. As shown in FIG. 7A, a current of the motor winding *N*_{*U*3} is *I*_{*U*3}, a current of the motor winding *N*_{*V*3} is *I*_{*V*3}, and a current of the motor winding *N*_{*W*3} is *I*_{*W*3}*.* In a case in which the three bridge arms are three-phase interleaved by 120°, the currents *I*_{*U*3}, *I*_{*V*3}, and *I*_{*W*3} are also interleaved by 120°. Therefore, at any *t*₇₁ moment, the output current *I_{O}* of the powertrain is a sum of the currents *I*_{*U*3}, *I_{V3}* and *I*_{*W*3}. For example, a ripple amplitude of a current of each motor winding is 65 A. A ripple amplitude of the output current *I_{O}* of the powertrain may be 20 A. It may be understood that it can be seen from the schematic diagram of a ripple shown in FIG. 7A that ripple currents of the three motor windings are interleaved. In this case, peak values of ripples of the motor windings may be staggered. For example, when a ripple current of the motor winding *N*_{*U*3} is large, a ripple current of the motor winding *N*_{*V*3} and a ripple current of the motor winding *N*_{*W*3} are small, so that a ripple of the output current of the powertrain is less than a ripple current of any motor winding.

Assuming that signals of the three bridge arms are synchronized, the currents *I*_{*U*3}, *I_{V3}* and *I*_{*W*3} are also synchronized, and peak values of ripples of the motor windings appear simultaneously, so that a ripple amplitude of the output current of the powertrain is 3 * 65 = 195 A. In this case, the ripple of the output current of the powertrain is large.

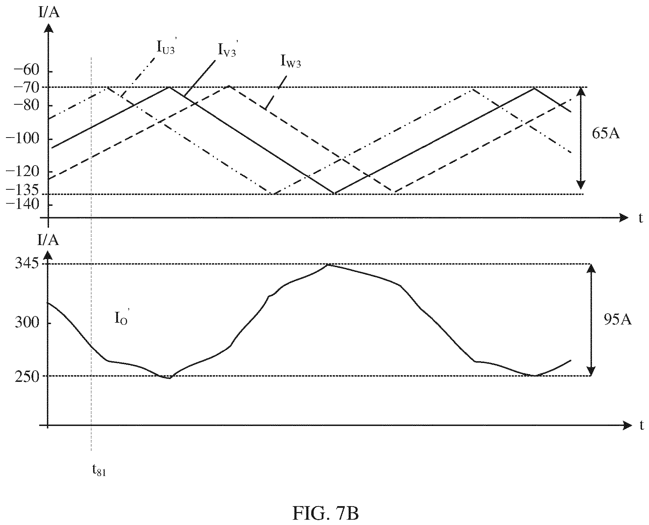

To describe an effect of the three-phase interleaved control manner with different angles on a size of the ripple of the output current of the powertrain, an embodiment of this application further provides a schematic diagram of a ripple shown in FIG. 7B. In the schematic diagram of a current ripple shown in FIG. 7B, the controller controls the three bridge arms by using a control manner of three-phase interleaving by 60°, that is, the first preset time period and the third preset time period are equal, and are T/6. In this case, as shown in FIG. 7B, a current of the motor winding *N*_{*U*3} is *I*_{*U*3}', a current of the motor winding *N*_{*V*3} is *I*_{*V*3}*'*, and a current of the motor winding *N*_{*W*3} is *I*_{*W*3}*'*. Therefore, at any *t*₈₁ moment, an output current *I_{O}*' of the powertrain is a sum of the currents *I*_{*U*3}*', I*_{*V*3}' and *I*_{*W*3}'. For example, a ripple amplitude of a current of each motor winding is 65 A. A ripple amplitude of the output current *I_{O}'* of the powertrain may be 95 A.

Optionally, in some possible implementations, periods of the PWM1" signal, the PWM2" signal, and the PWM3" signal are equal, that is, are all T. In addition, duty ratios of the PWM1" signal, the PWM2" signal, and the PWM3" signal are the same. By implementing this embodiment of this application, the controller may generate control signals of the three bridge arms by using a same working frequency, and does not need to switch different frequencies to generate signals with different periods, which is easy to control.

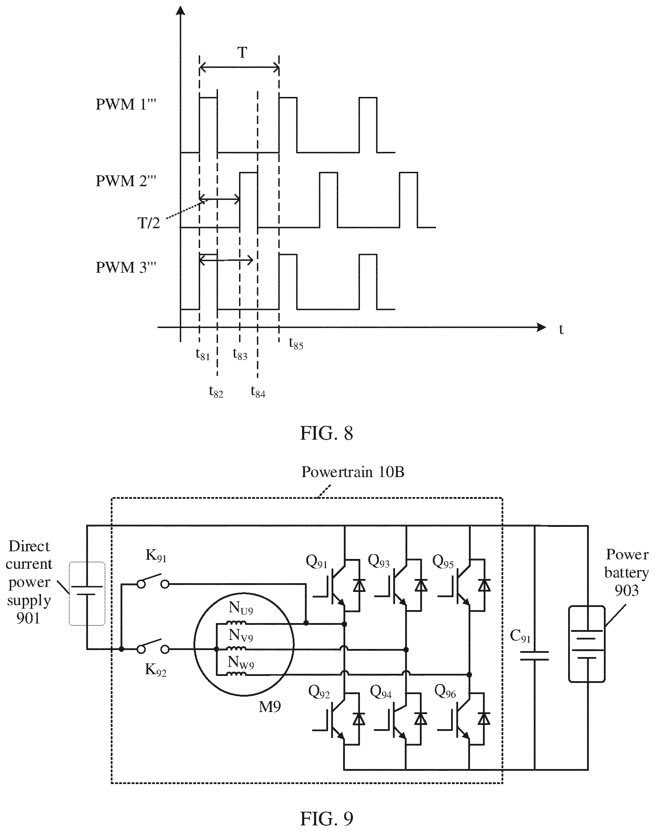

FIG. 8 is a schematic diagram of another waveform according to an embodiment of this application. As shown in FIG. 8, the controller may send a PWM1‴ signal to the switch tube *Q*₃₁, send a PWM2‴ signal to the switch tube *Q*₃₃, and send a PWM3‴ signal to the switch tube *Q*₃₅. In this case, a rising edge of the PWM1"' signal, for example, is at a *t*₈₁ moment, a corresponding falling edge is at a *t*₈₂ moment. A rising edge of the PWM2‴ signal, for example, is at the *t*₈₁ moment, and a corresponding falling edge is at the *t*₈₂ moment. That is, the rising edge of the PWM1"' signal and the rising edge of the PWM2‴ signal appear simultaneously, and the falling edge of the PWM1"' signal and the falling edge of the PWM2"' signal appear simultaneously. In this case, a time period of the PWM1‴ signal is a time difference (for example, T) between the *t*₈₂ moment and the *t*₈₁ moment.

A rising edge of the PWM2‴ signal, for example, is at a *t*₈₃ moment, and a corresponding falling edge is at a *t*₈₄ moment. It can be seen that the *t*₈₃ moment lags behind the *t*₈₁ moment for a first preset time period, and the first preset time period is T/2. In this case, two of the three bridge arms are interleaved by 180°.

The schematic diagram of the waveform shown in this embodiment of this application specifically realizes two-phase interleaving by 180°, that is, switch tubes in two bridge arms are not turned on simultaneously. For example, the switch tube *Q*₃₁ and the switch tube *Q*₃₃ are turned on simultaneously, and the switch tube *Q*₃₅ lags behind the switch tube *Q*₃₁ and the switch tube *Q*₃₃ for T/2 to be turned on. It is found by the inventor of this application in the process of research and practice that when the controller controls the three bridge arms by using the schematic diagram of the waveform shown in FIG. 8, the amount of the heat generated by the magnetic steel of the motor is small.

In conclusion, each switch tube (for example, the switch tube *Q*₃₁, the switch tube *Q*₃₃, and the switch tube *Q*₃₅) in the three bridge arms is turned on when receiving a voltage in high level, and is turned off when receiving a voltage in low level. Therefore, each switch tube may be turned on or off based on the schematic diagram of the waveform shown in FIG. 4, FIG. 5, and FIG. 6, so that the powertrain forms different circuit statuses, thereby increasing the voltage of the direct current power supply 301, and further providing the increased voltage to the power battery 303.

It should be noted that the controller controls the switch tubes in the three bridge arms by using any schematic diagram of the waveform shown in FIG. 4 to FIG. 6, which should be understood as an exemple. The controller may further use another schematic diagram, provided that rising edges or falling edges of signals of switch tubes of any two of the three bridge arms are interleaved.

FIG. 9 is a schematic diagram of another structure of a powertrain according to an embodiment of this application. As shown in FIG. 9, a powertrain 10B is disposed between a direct current power supply 901 and a power battery 903. The powertrain 10B includes three bridge arms, a motor M9, a first switching switch *K*₉₁, and a second switching switch *K*₉₂.

An example in which a switch included in a bridge arm is specifically an IGBT and an anti-parallel diode of the IGBT is used. As shown in FIG. 9, a first bridge arm includes a switch tube *Q*₉₁ and a switch tube *Q*₉₂ connected in series with the switch tube *Q*₉₁. A second bridge arm includes a switch tube *Q*₉₃ and a switch tube *Q*₉₄ connected in series with the switch tube *Q*₉₃. A third bridge arm includes a switch tube *Q*₉₅ and a switch tube *Q*₉₆ connected in series with *Q*₉₅.

It should be noted that the first bridge arm, the second bridge arm, and the third bridge arm may be interchangeable. For example, the first bridge arm includes the switch tube *Q*₉₃ and the switch tube *Q*₉₄ connected in series with the switch tube Q₉₃. The second bridge arm includes the switch tube *Q*₉₅ and the switch tube *Q*₉₆ connected in series with the switch tube *Q*₉₅. The third bridge arm includes the switch tube *Q*₉₁ and the switch tube *Q*₉₂ connected in series with the switch tube *Q*₉₁.

The first switching switch *K*₉₁ and the second switching switch *K*₉₂ may be specifically a contactor, a relay, an IGBT, or a MOSFET.

A first end of the direct current power supply 901 is coupled to one end of each bridge arm and a first end of the power battery 903. In this case, the first end of the direct current power supply 901 shown in FIG. 9 is a positive end, and a second end of the direct current power supply 901 is a negative end. The first end of the power battery 903 is a positive end, and a second end of the power battery 903 is a negative end.

That is, the positive end of the direct current power supply 901 is coupled to a collector of the switch tube *Q*₉₁, a collector of the switch tube *Q*₉₃, a collector of the switch tube *Q*₉₅, and the positive end of the power battery 903. The negative end of the power battery 903 is coupled to an emitter of the switch tube *Q*₉₂, an emitter of the switch tube *Q*₉₄, and an emitter of the switch tube *Q*₉₆.

A midpoint of each bridge arm is coupled to one end of a motor winding corresponding to each bridge arm. The midpoint of each bridge arm is a series coupling point between two switch units connected in series. In this case, an emitter of the switch tube *Q*₉₁ and a collector of the switch tube *Q*₉₂ are coupled to one end of a motor winding *N*_{*U*9}, an emitter of the switch tube *Q*₉₃ and a collector of the switch tube *Q*₉₄ are coupled to one end of a motor winding *N*_{*V*9}, and an emitter of the switch tube *Q*₉₅ and a collector of the switch tube *Q*₉₆ are coupled to one end of a motor winding *N*_{*W*9}.

One end of the first switching switch *K*₉₁ is coupled to a midpoint of any of the three bridge arms. FIG. 9 uses an example in which one end of the first switching switch *K*₉₁ is coupled to the emitter of the switch tube *Q*₉₁ and the collector of the switch tube *Q*₉₂. Optionally, one end of the first switching switch *K*₉₁ may be coupled to the emitter of the switch tube *Q*₉₃ and the collector of the switch tube *Q*₉₄. Alternatively, one end of the first switching switch *K*₉₁ may be coupled to the emitter of the switch tube *Q*₉₅ and the collector of the switch tube *Q*₉₆.

The other end of the motor winding *N*_{*U*9}, the other end of the motor winding *N*_{*V*9}, and the motor winding *N*_{*W*9} are coupled to one end of the second switching switch *K*₉₂. The other end of the second switching switch *K*₉₂ and the other end of the first switching switch *K*₉₁ are coupled to the negative end of the direct current power supply 901.

Optionally, in some possible implementations, the powertrain further includes an inductor (not shown in the figure). A specific connection manner of the inductor may be that one end of the inductor is coupled to the other end of the second switching switch *K*₉₂ and the other end of the first switching switch *K*₉₁, and the other end of the inductor is coupled to the second end of the direct current power supply 901.

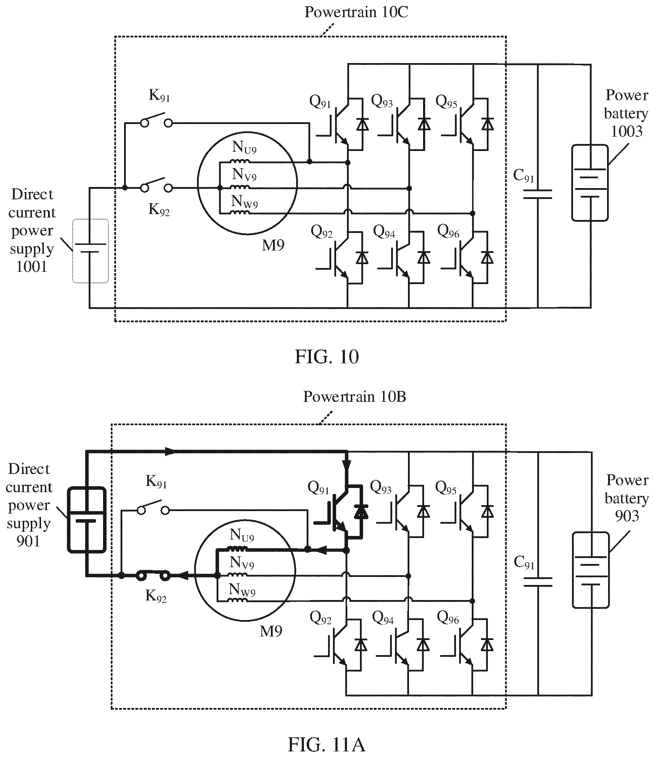

Optionally, in some possible implementations, FIG. 10 is a schematic diagram of another structure of a powertrain according to an example useful for understanding the invention. As shown in FIG. 10, a powertrain 10C is disposed between a direct current power supply 1001 and a power battery 1003. An internal structure of the powertrain 10C may refer to the powertrain 10B shown in FIG. 9. That is, the emitter of the switch tube *Q*₉₁ and the collector of the switch tube *Q*₉₂ are coupled to one end of the motor winding *N*_{*U*9}, the emitter of the switch tube *Q*₉₃ and the collector of the switch tube *Q*₉₄ are coupled to one end of the motor winding *N*_{*V*9}*,* and the emitter of the switch tube *Q*₉₅ and the collector of the switch tube *Q*₉₆ are coupled to one end of the motor winding *N*_{*W*9}. The other end of the motor winding *N*_{*U*9}, the other end of the motor winding *N*_{*V*9}, and the motor winding *N*_{*W*9} are coupled to one end of the second switching switch *K*₉₂, and one end of the first switching switch *K*₉₁ is coupled to the emitter of the switch tube *Q*₉₁ and the collector of the switch tube *Q*₉₂.

Compared to the powertrain 10B shown in FIG. 9, the powertrain 10C have a different manner of coupling the direct current power supply 1001 outward. In this case, in FIG. 10, a first end of the direct current power supply 1001 is a negative end, and a second end of the direct current power supply 1001 is a positive end. A first end of the power battery 1003 is a negative end, and a second end of the power battery 1003 is a positive end.

That is, the positive end of the direct current power supply 1001 is coupled to the other end of the second switching switch *K*₉₂ and the other end of the first switching switch *K*₉₁, and the negative end of the direct current power supply 1001 is coupled to the collector of the switch tube *Q*₉₂, the collector of the switch tube *Q*₉₄, the collector of the switch tube *Q*₉₆, and the positive end of the power battery 1003. The positive end of the power battery 1003 is coupled to the collector of the switch tube *Q*₉₁, the collector of the switch tube *Q*₉₃, and the collector of the switch tube *Q*₉₅.

The powertrain 10B shown in FIG. 9 is used as an example below to describe a circuit status of the powertrain.

For example, the controller controls the second switching switch *K*₉₂ to be turned on, and the controller sends a signal to each bridge arm based on the waveform shown in FIG. 6. That is, the controller may send the PWM1" signal to the switch tube *Q*₃₁, send the PWM2" signal to the switch tube *Q*₃₃, and send the PWM3" signal to the switch tube *Q*₃₅.

Therefore, in a time period between the *t*₆₁ moment and the *t*₆₂ moment, the switch tube *Q*₉₁ is turned on, the switch tube *Q*₉₃ and the switch tube *Q*₉₅ are turned on, and the second switching switch *K*₉₂ is turned on. In this case, the powertrain 10B forms a circuit status shown in FIG. 11A. The direct current power supply 901 charges the motor winding *N*_{*U*9} through the switch tube *Q*₉₁.

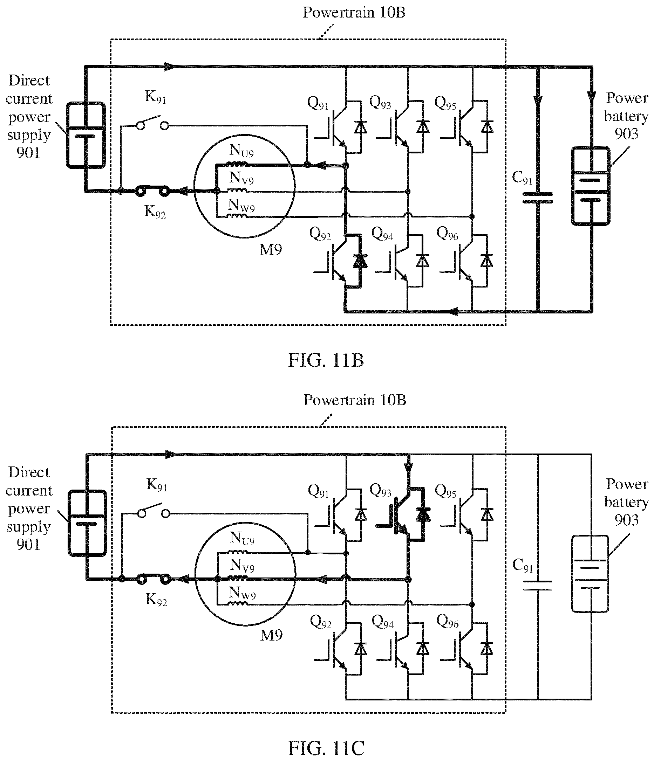

In a time period between the *t*₆₂ moment and the *t*₆₃ moment, the switch tube *Q*₉₁, the switch tube *Q*₉₃, and the switch tube *Q*₉₅ are turned off, and the second switching switch *K*₉₂ is turned on. In this case, the powertrain 10B forms a circuit status shown in FIG. 11B. The direct current power supply 901 and the motor winding *N*_{*U*9} are discharged jointly, and a voltage of two ends of the power battery 903 is a sum of a voltage of the direct current power supply 901 and a voltage of the motor winding *N*_{*U*9}, thereby increasing the voltage of the direct current power supply 901, and further providing the increased voltage to the power battery 903.

In a time period between the *t*₆₃ moment and the *t*₆₄ moment, the switch tube *Q*₉₃ is turned on, the switch tube *Q*₉₁ and the switch tube *Q*₉₅ are turned off, and the second switching switch *K*₉₂ is turned on. In this case, the powertrain 10B forms a circuit status shown in FIG. 11C. The direct current power supply 901 charges the motor winding *N*_{*V*9} through the switch tube *Q*₉₃.

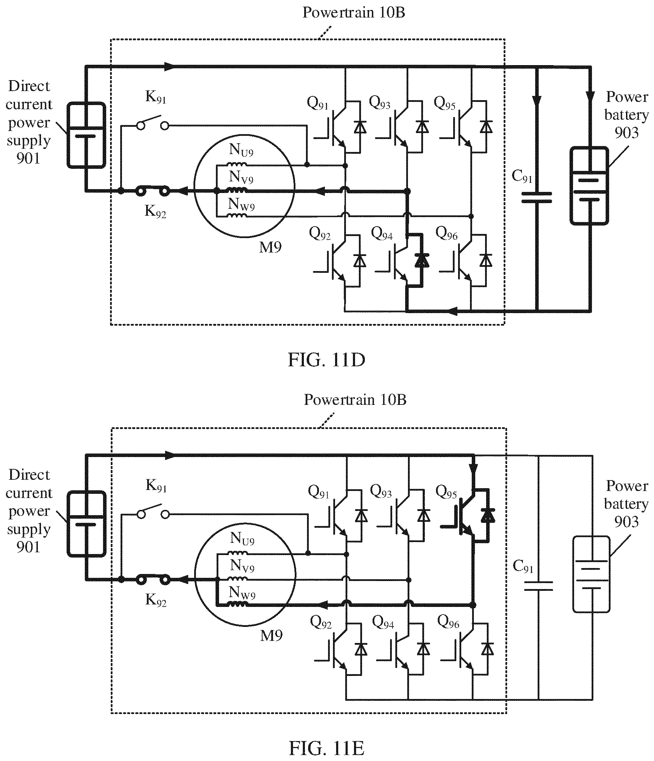

In a time period between the *t*₆₄ moment and the *t*₆₅ moment, the switch tube *Q*₉₁, the switch tube *Q*₉₃, and the switch tube *Q*₉₅ are turned off, and the second switching switch *K*₉₂ is turned on. In this case, the powertrain 10B forms a circuit status shown in FIG. 11D. The direct current power supply 901 and the motor winding *N*_{*V*9} are discharged jointly, and a voltage of two ends of the power battery 903 is a sum of a voltage of the direct current power supply 901 and a voltage of the motor winding *N*_{*V*9}, thereby increasing the voltage of the direct current power supply 901, and further providing the increased voltage to the power battery 903.

In a time period between the *t*₆₅ moment and the *t*₆₆ moment, the switch tube *Q*₉₅ is turned on, the switch tube *Q*₉₁ and the switch tube *Q*₉₃ are turned off, and the second switching switch *K*₉₂ is turned on. In this case, the powertrain 10B forms a circuit status shown in FIG. 11E. The direct current power supply 901 charges the motor winding *N*_{*W*9} through the switch tube *Q*₉₅.

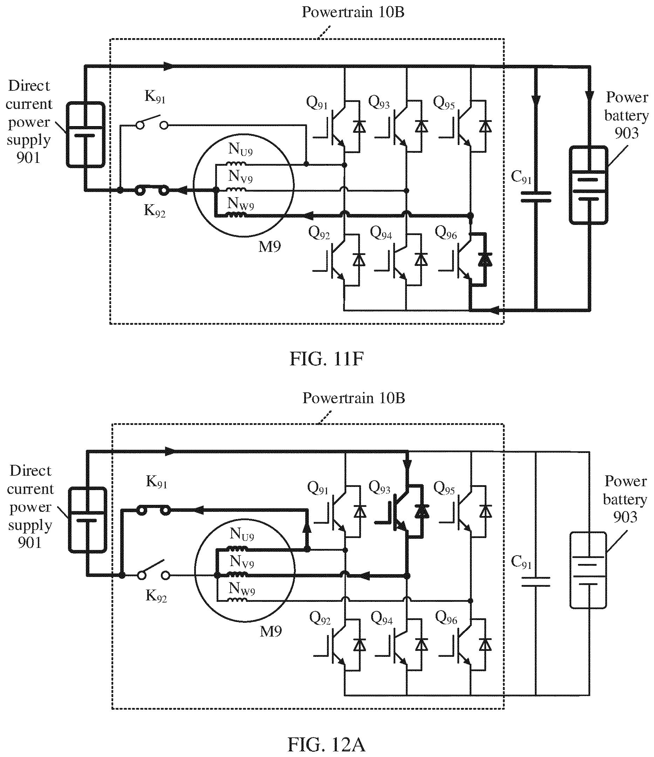

In a time period between the *t*₆₆ moment and the *t*₆₉ moment, the switch tube *Q*₉₁, the switch tube *Q*₉₃, and the switch tube *Q*₉₅ are turned off, and the second switching switch *K*₉₂ is turned on. In this case, the powertrain 10B forms a circuit status shown in FIG. 11F. The direct current power supply 901 and the motor winding *N*_{*W*9} are discharged jointly, and a voltage of two ends of the power battery 903 is a sum of a voltage of the direct current power supply 901 and a voltage of the motor winding *N*_{*W*9}, thereby increasing the voltage of the direct current power supply 901, and further providing the increased voltage to the power battery 903.

In conclusion, FIG. 11A to FIG. 11F are all circuit statuses that can be formed by the powertrain 10B in a case in which the second switching switch *K*₉₂ is turned on and the first switching switch *K*₉₁ is turned off.

In some possible implementations, when a difference between a voltage of the power battery 903 and a voltage of the direct current power supply 901 is less than a first preset threshold, the first switching switch *K*₉₁ is turned off, and the second switching switch *K*₉₂ is turned on. The first preset threshold is an experienced value, such as 100 V or 150 V.

For example, before sending a PWM signal to each switch tube, the controller detects the voltage of the direct current power supply 901 and the voltage of the power battery 903. For example, when the controller detects that the voltage of the direct current power supply 901 is 500 V, the voltage of the power battery 903 is 600 V, and the first preset threshold is 150 V, the controller controls the first switching switch *K*₉₁ to be turned off, and the second switching switch *K*₉₂ to be turned on. In another example, after the controller sends a PWM signal to each switch tube, the power battery 903 is in a charging status, and the controller still detects the voltage of the power battery 903 in real time during charging. For example, before the voltage of the power battery 903 is charged from 600 V to 950 V, and when a difference between the voltage of the power battery 903 and the voltage of the direct current power supply 901 is less than the first preset threshold, the controller continues to control the first switching switch *K*₉₁ to be turned off, and the second switching switch *K*₉₂ to be turned on.

After the voltage of the power battery 903 is greater than or equal to 950 V, the controller controls the first switching switch *K*₉₁ to be turned on, and the second switching switch *K*₉₂ to be turned off.

Optionally, in some possible implementations, when a difference between a voltage of the power battery 903 and a voltage of the direct current power supply 901 is greater than or equal to a first preset threshold, the first switching switch *K*₉₁ is turned on, and the second switching switch *K*₉₂ is turned off. In this case, the controller may send a fourth PWM signal to the switch tube *Q*₉₃, and send a fifth PWM signal to the switch tube *Q*₉₅. In addition, the switch tube *Q*₉₁ is in a turn-off status. It may be understood that the controller may send a voltage in low level to the switch tube *Q*₉₁, to enable the switch tube *Q*₉₁ to be turned off. Alternatively, the controller does not control the switch tube *Q*₉₁, and a default status of the switch tube *Q*₉₁ is a turn-off status.

It should be noted that the fourth PWM signal and the fifth PWM signal may be synchronized signals, or rising edges or falling edges of the two signals may be interleaved. The fourth PWM signal and the fifth PWM signal are not limited in this example of this application.

In this case, the powertrain 10B may have a plurality of circuit statuses. For example, the switch tube *Q*₉₃ is turned on, the switch tube *Q*₉₅ is turned off, and the first switching switch *K*₉₁ is turned on. In this case, the powertrain 10B may form a circuit status shown in FIG. 12A. The direct current power supply 901 charges the motor winding *N*_{*V*9} and the motor winding *N*_{*U*9} through the switch tube *Q*₉₃.

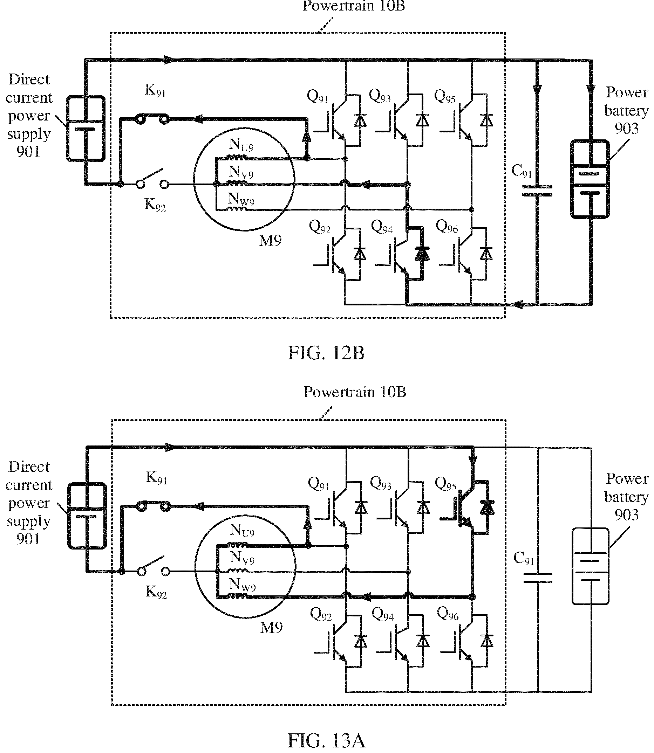

The switch tube *Q*₉₃ and the switch tube *Q*₉₅ are turned off, and the first switching switch *K*₉₁ is turned on. In this case, the powertrain 10B may form a circuit status shown in FIG. 12B. The direct current power supply 901, the motor winding *N*_{*V*9}, and the motor winding *N*_{*U*9} are discharged jointly, and a voltage of two ends of the power battery 903 is a sum of a voltage of the direct current power supply 901 and voltages of the motor winding *N*_{*U*9} and the motor winding *N*_{*V*9}, thereby increasing the voltage of the direct current power supply 901, and further providing the increased voltage to the power battery 903.

In another example, the switch tube *Q*₉₅ is turned on, the switch tube *Q*₉₃ is turned off, and the first switching switch *K*₉₁ is turned on. In this case, the powertrain 10B may form a circuit status shown in FIG. 13A. The direct current power supply 901 charges the motor winding *N*_{*W*9} and the motor winding *N*_{*U*9} through the switch tube *Q*₉₅.

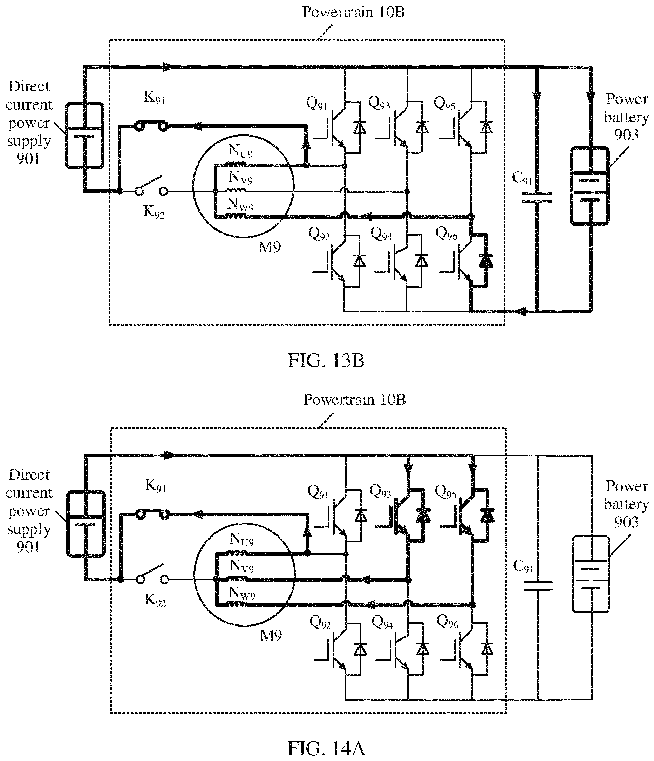

The switch tube *Q*₉₃ and the switch tube *Q*₉₅ are turned off, and the first switching switch *K*₉₁ is turned on. In this case, the powertrain 10B may form a circuit status shown in FIG. 13B. The direct current power supply 901, the motor winding *N*_{*W*9}, and the motor winding *N*_{*U*9} are discharged jointly, and a voltage of two ends of the power battery 903 is a sum of a voltage of the direct current power supply 901 and voltages of the motor winding *N*_{*U*9} and the motor winding *N*_{*W*9}, thereby increasing the voltage of the direct current power supply 901, and further providing the increased voltage to the power battery 903.

In another example, the switch tube *Q*₉₃ and the switch tube *Q*₉₅ are turned on, and the first switching switch *K*₉₁ is turned on. In this case, the powertrain 10B may form a circuit status shown in FIG. 14A. The direct current power supply 901 charges the motor winding *N*_{*V*9} and the motor winding *N*_{*U*9} through the switch tube *Q*₉₃, and the direct current power supply 901 further charges the motor winding *N*_{*W*9} and the motor winding *N*_{*U*9} through the switch tube *Q*₉₅.

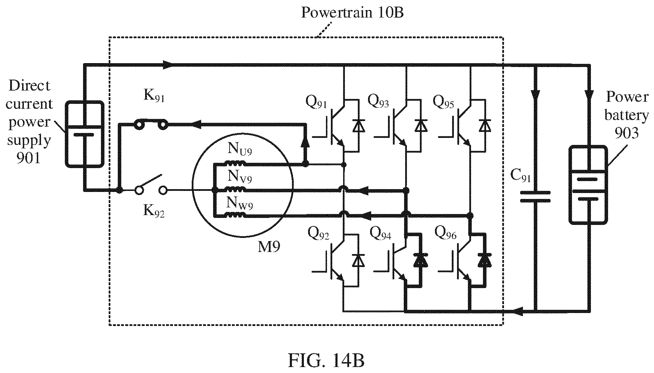

The switch tube *Q*₉₃ and the switch tube *Q*₉₅ are turned on, and the first switching switch *K*₉₁ is turned on. In this case, the powertrain 10B may form a circuit status shown in FIG. 14B. The direct current power supply 901, the motor winding *N*_{*U*9}, and the motor winding *N*_{*V*9} are discharged jointly, and the direct current power supply 901, the motor winding *N*_{*U*9}, and the motor winding *N*_{*W*9} are discharged jointly. In this case, a sum of a voltage of two ends when the motor winding *N*_{*V*9} and the motor winding *N*_{*W*9} are connected in parallel, a voltage of two ends of the motor winding *N*_{*U*9}, and a voltage of two ends of the direct current power supply 901 is a voltage of two ends of the power battery 903.

It should be noted that the terms "first" and "second" are merely intended for a purpose of description, and shall not be understood as an indication or implication of relative importance.

## Claims

1. A powertrain (10), wherein the powertrain is disposed between a direct current power supply and a power battery (203), the powertrain comprises a motor control unit, MCU, (101) and a motor (102), the MCU comprises three bridge arms and a controller, and the motor comprises three motor windings corresponding to the three bridge arms;
a first end of the direct current power supply is coupled to one end of each of the three bridge arms and a first end of the power battery, a second end of the power battery is coupled to the other end of each bridge arm, a midpoint of each bridge arm is coupled to one end of a motor winding corresponding to each bridge arm, and the other end of each of the three motor windings is coupled to a second end of the direct current power supply; and
the three bridge arms comprise a first bridge arm and a second bridge arm, the first bridge arm is turned on or off based on a first pulse width modulation, PWM signal sent by the controller, and the second bridge arm is turned on or off based on a second PWM signal sent by the controller; and a rising edge of the second PWM signal lags behind a first preset time period relative to a rising edge of the first PWM signal, or a falling edge of the second PWM signal lags behind a second preset time period relative to a falling edge of the first PWM signal; the three bridge arms further comprise a third bridge arm, and the third bridge arm is turned on or off based on a third PWM signal;
**characterized in that**
a rising edge of the third PWM signal and the rising edge of the first PWM signal appear simultaneously; and a falling edge of the third PWM signal and the falling edge of the first PWM signal appear simultaneously,
wherein a time period of the first PWM signal is T, and the first preset time period is T/2, or the second preset time period is T/2.

2. The powertrain according to claim 1 further comprising a first switching switch and a second switching switch, wherein
one end of the first switching switch is coupled to a midpoint of any of the three bridge arms; and
that the other end of each of the three motor windings is coupled to a second end of the direct current power supply specifically comprises:
the other end of each of the three motor windings is coupled to one end of the second switching switch, and the other end of the second switching switch and the other end of the first switching switch are coupled to the second end of the direct current power supply.

3. A charging control method, wherein the charging control method is applied to a powertrain, the powertrain comprises a motor control unit, MCU and a motor, the MCU comprises three bridge arms and a controller, and the motor comprises three motor windings corresponding to the three bridge arms;
a first end of the direct current power supply is coupled to one end of each of the three bridge arms and a first end of a power battery, a second end of the power battery is coupled to the other end of each bridge arm, a midpoint of each bridge arm is coupled to one end of a motor winding corresponding to each bridge arm, the other end of each of the three motor windings is coupled to a second end of the direct current power supply, and the three bridge arms comprise a first bridge arm and a second bridge arm and a third bridge arm;
the charging control method comprises:
sending, by the controller, a first pulse width modulation, PWM signal to the first bridge arm, and sending a second PWM signal to the second bridge arm, wherein a rising edge of the second PWM signal lags behind a first preset time period relative to a rising edge of the first PWM signal, or a falling edge of the second PWM signal lags behind a second preset time period relative to a falling edge of the first PWM signal;
**characterized in that**
the charging control method further comprises:
sending, by the controller, a third PWM signal to the third bridge arm, wherein a rising edge of the third PWM signal and the rising edge of the first PWM signal appear simultaneously, and a falling edge of the third PWM signal and the falling edge of the first PWM signal appear simultaneously, wherein a time period of the first PWM signal is T, and the first preset time period is T/2, or the second preset time period is T/2.

4. An electric vehicle, comprising a power battery and the powertrain according to any one of claims 1 to 2.

## Patentansprüche

1. Antriebsstrang (10), wobei der Antriebsstrang zwischen einer Gleichstromversorgung und einem Power-Akku (203) angeordnet ist, der Antriebsstrang eine Motorsteuereinheit, MCU, (101) und einen Motor (102) umfasst, die MCU drei Brückenzweige und einen Controller umfasst und der Motor drei Motorwicklungen umfasst, die den drei Brückenzweigen entsprechen;
ein erstes Ende der Gleichstromversorgung mit einem Ende jedes der drei Brückenzweige und einem ersten Ende des Power-Akkus gekoppelt ist, ein zweites Ende des Power-Akkus mit dem anderen Ende jedes Brückenzweigs gekoppelt ist, ein Mittelpunkt jedes Brückenzweigs mit einem Ende einer dem jeweiligen Brückenzweig entsprechenden Motorwicklung gekoppelt ist und das andere Ende jeder der drei Motorwicklungen mit einem zweiten Ende der Gleichstromversorgung gekoppelt ist; und
die drei Brückenzweige einen ersten Brückenzweig und einen zweiten Brückenzweig umfassen, wobei der erste Brückenzweig basierend auf einem ersten, von dem Controller gesendeten Pulsweitenmodulations(PWM)-Signal, ein- oder ausgeschaltet wird und der zweite Brückenzweig basierend auf einem zweiten, von dem Controller gesendeten PWM-Signal ein- oder ausgeschaltet wird; und eine steigende Flanke des zweiten PWM-Signals relativ zu einer steigenden Flanke des ersten PWM-Signals um eine erste voreingestellte Zeitspanne zurückliegt oder eine fallende Flanke des zweiten PWM-Signals relativ zu einer fallenden Flanke des ersten PWM-Signals um eine zweite voreingestellte Zeitspanne zurückliegt; die drei Brückenzweige ferner einen dritten Brückenzweig umfassen und der dritte Brückenzweig basierend auf einem dritten PWM-Signal ein- oder ausgeschaltet wird;
**dadurch gekennzeichnet, dass**
eine steigende Flanke des dritten PWM-Signals und die steigende Flanke des ersten PWM-Signals gleichzeitig auftreten und eine fallende Flanke des dritten PWM-Signals und die fallende Flanke des ersten PWM-Signals gleichzeitig auftreten;
wobei eine Zeitspanne des ersten PWM-Signals T ist und die erste voreingestellte Zeitspanne T/2 ist oder die zweite voreingestellte Zeitspanne T/2 ist.

2. Antriebsstrang nach Anspruch 1, der ferner einen ersten Schaltschalter und einen zweiten Schaltschalter umfasst, wobei
ein Ende des ersten Schaltschalters mit einem Mittelpunkt eines beliebigen der drei Brückenzweige gekoppelt ist und
dass das andere Ende jeder der drei Motorwicklungen mit einem zweiten Ende der Gleichstromversorgung gekoppelt ist, insbesondere umfasst, dass:
das andere Ende jeder der drei Motorwicklungen mit einem Ende des zweiten Schaltschalters gekoppelt ist und das andere Ende des zweiten Schaltschalters und das andere Ende des ersten Schaltschalters mit dem zweiten Ende der Gleichstromversorgung gekoppelt sind.

3. Ladesteuerungsverfahren, wobei das Ladesteuerungsverfahren auf einen Antriebsstrang angewendet wird, der Antriebsstrang eine Motorsteuereinheit, MCU, und einen Motor umfasst, die MCU drei Brückenzweige und einen Controller umfasst und der Motor drei Motorwicklungen umfasst, die den drei Brückenzweigen entsprechen;
ein erstes Ende der Gleichstromversorgung mit einem Ende jedes der drei Brückenzweige und einem ersten Ende eines Power-Akkus gekoppelt ist, ein zweites Ende des Power-Akkus mit dem anderen Ende jedes Brückenzweigs gekoppelt ist, ein Mittelpunkt jedes Brückenzweigs mit einem Ende einer dem jeweiligen Brückenzweig entsprechenden Motorwicklung gekoppelt ist, das andere Ende jeder der drei Motorwicklungen mit einem zweiten Ende der Gleichstromversorgung gekoppelt ist und die drei Brückenzweige einen ersten Brückenzweig und einen zweiten Brückenzweig und einen dritten Brückenzweig umfassen;
wobei das Ladesteuerungsverfahren umfasst:
Senden eines ersten Pulsweitenmodulations(PWM)-Signals durch den Controller an den ersten Brückenzweig und Senden eines zweiten PWM-Signals an den zweiten Brückenzweig, wobei eine steigende Flanke des zweiten PWM-Signals relativ zu einer steigenden Flanke des ersten PWM-Signals um eine erste voreingestellte Zeitspanne zurückliegt oder eine fallende Flanke des zweiten PWM-Signals relativ zu einer fallenden Flanke des ersten PWM-Signals um eine zweite voreingestellte Zeitspanne zurückliegt;
**dadurch gekennzeichnet, dass**
das Ladesteuerungsverfahren ferner umfasst:
Senden eines dritten PWM-Signals durch den Controller an den dritten Brückenzweig, wobei eine steigende Flanke des dritten PWM-Signals und die steigende Flanke des ersten PWM-Signals gleichzeitig auftreten und eine fallende Flanke des dritten PWM-Signals und die fallende Flanke des ersten PWM-Signals gleichzeitig auftreten, wobei eine Zeitspanne des ersten PWM-Signals T ist und die erste voreingestellte Zeitspanne T/2 ist oder die zweite voreingestellte Zeitspanne T/2 ist.

4. Elektrofahrzeug, das einen Power-Akku und den Antriebsstrang nach einem der Ansprüche 1 bis 2 umfasst.

## Revendications

1. Groupe motopropulseur (10), dans lequel le groupe motopropulseur est placé entre une alimentation en courant continu et une batterie d'alimentation (203), le groupe motopropulseur comprend une unité de commande de moteur, MCU (101) et un moteur (102), la MCU comprend trois branches de pont et un dispositif de commande, et le moteur comprend trois enroulements de moteur correspondant aux trois branches de pont ;
une première extrémité de l'alimentation en courant continu est couplée à une extrémité de chacune des trois branches de pont et à une première extrémité de la batterie d'alimentation, une seconde extrémité de la batterie d'alimentation est couplée à l'autre extrémité de chaque branche de pont, un point médian de chaque branche de pont est couplé à une extrémité d'un enroulement de moteur correspondant à chaque branche de pont, et l'autre extrémité de chacun des trois enroulements de moteur est couplée à une seconde extrémité de l'alimentation en courant continu ; et
les trois branches de pont comprennent une première branche de pont et une deuxième branche de pont, la première branche de pont est activée ou désactivée en fonction d'un premier signal de modulation d'impulsions en durée, MID, envoyé par le dispositif de commande, et la deuxième branche de pont est activée ou désactivée en fonction d'un deuxième signal MID envoyé par le dispositif de commande ; et un front montant du deuxième signal MID est en retard sur une première période de temps prédéfinie par rapport à un front montant du premier signal MID, ou un front descendant du deuxième signal MID est en retard sur une seconde période de temps prédéfinie par rapport à un front descendant du premier signal MID ; les trois branches de pont comprennent en outre une troisième branche de pont, et la troisième branche de pont est activée ou désactivée en fonction d'un troisième signal MID ;
**caractérisé en ce que**
un front montant du troisième signal MID et le front montant du premier signal MID apparaissent simultanément ; et un front descendant du troisième signal MID et le front descendant du premier signal MID apparaissent simultanément ;
dans lequel une période de temps du premier signal MID est T, et la première période de temps prédéfinie est T/2, ou la seconde période de temps prédéfinie est T/2.

2. Groupe motopropulseur selon la revendication 1, comprenant en outre un premier commutateur de commutation et un second commutateur de commutation, dans lequel une extrémité du premier commutateur de commutation est couplée à un point médian de l'une quelconque des trois branches de pont ; et
le fait que l'autre extrémité de chacun des trois enroulements de moteur est couplée à une seconde extrémité de l'alimentation en courant continu comprend spécifiquement : l'autre extrémité de chacun des trois enroulements de moteur est couplée à une extrémité du second commutateur de commutation, et l'autre extrémité du second commutateur de commutation et l'autre extrémité du premier commutateur de commutation sont couplées à la seconde extrémité de l'alimentation en courant continu.

3. Procédé de commande de charge, dans lequel le procédé de commande de charge est appliqué à un groupe motopropulseur, le groupe motopropulseur comprend une unité de commande de moteur, MCU, et un moteur, la MCU comprenant trois branches de pont et un dispositif de commande, et le moteur comprend trois enroulements de moteur correspondant aux trois branches de pont ;
une première extrémité de l'alimentation en courant continu est couplée à une extrémité de chacune des trois branches de pont et à une première extrémité d'une batterie d'alimentation, une seconde extrémité de la batterie d'alimentation est couplée à l'autre extrémité de chaque branche de pont, un point médian de chaque branche de pont est couplé à une extrémité d'un enroulement de moteur correspondant à chaque branche de pont, l'autre extrémité de chacun des trois enroulements de moteur est couplée à une seconde extrémité de l'alimentation en courant continu, et les trois branches de pont comprennent une première branche de pont, une deuxième branche de pont et une troisième branche de pont ;
le procédé de commande de charge comprend :
l'envoi, par le dispositif de commande, d'un premier signal de modulation d'impulsions en durée, MID, à la première branche de pont, et l'envoi d'un deuxième signal MID à la deuxième branche de pont, dans lequel un front montant du deuxième signal MID est en retard sur une première période de temps prédéfinie par rapport à un front montant du premier signal MID, ou un front descendant du deuxième signal MID est en retard sur une seconde période de temps prédéfinie par rapport à un front descendant du premier signal MID ;
**caractérisé en ce que**
le procédé de commande de charge comprend en outre :
l'envoi, par le dispositif de commande, d'un troisième signal MID à la troisième branche de pont, dans lequel un front montant du troisième signal MID et le front montant du premier signal MID apparaissent simultanément, et un front descendant du troisième signal MID et le front descendant du premier signal MID apparaissent simultanément, dans lequel une période de temps du premier signal MID est T, et la première période de temps prédéfinie est T/2, ou la seconde période de temps prédéfinie est T/2.

4. Véhicule électrique comprenant une batterie d'alimentation et le groupe motopropulseur selon l'une quelconque des revendications 1 à 2.
